# EUROPÄISCHE PATENTSCHRIFT

(11) **EP 2 943 325 B1**
(45) Veröffentlichungstag und Bekanntmachung des Hinweises auf die Patenterteilung: **10.07.2019**
(21) Anmeldenummer: 13811379.0
(22) Anmeldetag: 05.12.2013
(51) Int. Cl.: B29C 48/76, B29B 7/84, B01D 5/00, B01D 19/00

(54) **VORRICHTUNG ZUM ENTGASEN VON POLYMERSCHMELZEN**
DEVICE FOR DEGASSING POLYMER MELTS
DISPOSITIF DE DÉGAZAGE DE POLYMÈRES FONDUS

(30) Priorität: 10.01.2013 DE 102013000316
(43) Veröffentlichungstag der Anmeldung: 18.11.2015
(73) Patentinhaber: Brückner Maschinenbau GmbH & Co. KG, 83313 Siegsdorf (DE)
(72) Erfinder: RABISER, Bernhard, 83334 Inzell (DE); SCHWUCHOW, Rainer, 83365 Nußdorf (DE)
(74) Vertreter: Flach Bauer Stahl Patentanwälte Partnerschaft mbB
(86) Internationale Anmeldenummer: PCT/EP2013/003683
(87) Internationale Veröffentlichungsnummer: WO 2014/108154

(56) Entgegenhaltungen:
- WO-A1-2008/110834
- DE-A1- 19 653 613
- JP-A- H07 328 301
- JP-A- 2004 098 378
- JP-A- 2005 134 079
- US-A- 3 933 575

## Beschreibung

Die Erfindung betrifft eine Vorrichtung zum Entgasen von Polymerschmelzen nach dem Oberbegriff des Anspruches 1.

Die Erfindung bezieht sich insbesondere auf ein Verfahren zum Entgasen von Polymerschmelzen für die kontinuierliche Weiterverarbeitung zu verstreckten Polymerfolien, wobei
- ein zu verarbeitender fester Kunststoff vorzugsweise in Granulatform von einer Plastifiziereinheit (Extruder) aufgeschmolzen wird,
- vorzugsweise ein oder mehrere flüssige oder feste Additive dem Kunststoff zugegeben werden, und
- die Mischung aus aufgeschmolzenem Kunststoff und Additiven in einer oder mehreren Vakuumzonen der Plastifizierungseinheit entgast wird, die mit einer Vakuumanlage in Verbindung steht bzw. stehen.

Entgasungsverfahren und Vorrichtungen sind insbesondere in der Extrusionstechnik bekannt und werden dort eingesetzt.

Kunststoffgranulat wird in einer Plastifizierungseinheit aufgeschmolzen und - bei Bedarf entsprechender Eigenschaften des fertigen Kunststoffprodukts - mit ein oder mehreren flüssigen oder festen Additiven (z. B. Weichmachern, Gleitmitteln, Antistatikmitteln, usw.) versetzt.

Die so entstandene Polymerschmelze beinhaltet in ihrem Inneren nach dem Aufschmelzen gasförmige Einschlüsse und flüssige Stoffe in Lösung, die das Fertigprodukt in seiner Qualität negativ beeinflussen würden, wenn die Schmelze in dieser Form verarbeitet werden würde. Bei der Herstellung von Kunststofffolien würden sich Einschlüsse sehr nachteilig bemerkbar machen. Daher schließt sich in der Plastifizierungseinheit meist im Anschluss an das Aufschmelzen des Kunststoffs und der Vermischung mit dem/den Additiv/en ein Entgasungsprozess in einer Vakuumzone an, bevor die Schmelze über eine Austrageinheit ausgebracht wird.

Zu diesem Zweck wird eine Vakuumanlage eingesetzt, die mit der Entgasungszone (Vakuumzone) in Verbindung steht. In der Vakuumanlage erzeugt ein Vakuumpumpenstand einen Unterdruck, der durch entsprechende Rohrleitungen auf die Vakuumzone wirken kann und so bewerkstelligt, dass störende Gase, Abbauprodukte von Polymeren und Additiven und Verunreinigungen aus der Schmelze abgezogen werden.

Ziel der Entgasung ist es ferner, Wasser (in Form von Wasserdampf) und nichtvernetzte Kunststoffmoleküle (Restmonomere) aus der Schmelze zu entfernen.

Diese gasförmigen und teilweise auch flüssigen Bestandteile, die durch Unterdruck aus der Plastifizierungseinheit entzogen werden, schädigen langfristig die Vakuumeinheit, wodurch die Lebensdauer und Verfügbarkeit verschiedener Bauteile erheblich verkürzt wird. Der Reinigungs- und Wartungsaufwand steigt erheblich, und Maschinenausfälle sind von Zeit zu Zeit unvermeidlich. Schließlich treten Probleme mit der Entsorgung dieser Stoffe und Maschinenkomponenten auf.

Der Grund für die Schädigung und Verunreinigung der Vakuumeinheit und der damit verbundenen Komponenten, wie etwa der Rohrleitungen, Ventile und Sensoren, liegt darin, dass die ausgeschiedenen Stoffe miteinander reagieren, und sich thermodynamisch bedingt auf den Oberflächen abscheiden.

### Stand der Technik

Um die vorgenannten Nachteile zu verringern sind im Stand der Technik verschiedene Abscheidemechanismen und -vorrichtungen bekannt.

Gemäß der DE 44 24 779 A1 wird vorgeschlagen insbesondere Weichmacheröl dem vorhandenen Vakuum zu entziehen. Dabei wird das aus dem Extrusionsprozess stammende und zu kondensierende Gas über eine Rohrleitung zu einem Feststoffabscheider geführt, in dem grobe Verunreinigungen und Restmonomere (Oligomere) abgetrennt werden. In einem Kondensatabscheider werden dampfförmige Bestandteile des Gases kondensiert und anschließend in einem Kondensatsammelgefäß aufgefangen. An den entsprechenden Stellen sind Ventile vorgesehen, die gegebenenfalls automatisch gesteuert werden, um einen ordnungsgemäßen Betrieb zu gewährleisten.

Gemäß der WO 2009/065384 A2 wird unter anderem vorgeschlagen, sublimationsfähige Gase auf einer gekühlten, horizontalen Platte zu resublimieren, die von dort abgeblasen werden. Thermodynamisch betrachtet wird in dieser Vorveröffentlichung ein Vorgang beschrieben, bei dem ein Feststoff unmittelbar in Gas übergeht und durch Kühlung als Feststoff auf der Kühlplatte resublimiert. Die Resublimierung kann gemäß dieser Vorveröffentlichung WO 2009/065384 A2 sowohl in einem Sublimator in Form einer gekühlten Platte als auch in einem nachgeordneten und nach dem Stand der Technik bekannten Taschenfilter erfolgen.

Gemäß der vorstehend genannten Vorveröffentlichung werden in einer ersten Stufe entsprechende Stoffe im Gas in Pulverform resublimiert, um dann die weiteren noch vorhandenen und nicht sublimationsfähigen Anteile in einer nachfolgenden Stufe auszufiltern. Denn bei kommerziellen Herstellungsanlagen für Folien tritt in einem Vakuum-Abscheider nicht nur pulverförmiges Resublimat auf, sondern vielmehr auch Mischungen, die aus flüssigen, pastösen und im geringsten Anteil aus festen und pulverförmigen Anteilen bestehen.

Ferner wird angemerkt, dass ganz allgemein Redundanzsysteme zum Stand der Technik gehören. Sie ermöglichen beispielsweise eine Wartung einzelner Komponenten, während die Anlage als solche weiter betrieben werden kann.

Die Wartung der verunreinigten Komponenten ist bei den bekannten Lösungen wirtschaftlich nur innerhalb längerer Perioden möglich. Egal wie die Ablagerungen aussehen ist eine Abnahme in der Wirksamkeit der Abscheider, wie Feststoffabscheider, Kondensatabscheider oder Sublimatabscheider, innerhalb dieser Perioden zu verzeichnen.

Aus der JP 2005 134079 A ist eine Vorrichtung zum Entgasen von Polymerschmelzen als bekannt zu entnehmen, die eine Plastifiziereinheit und eine dieser Plastifiziereinheit zugeordnete Vakuumzone umfasst. Die zumindest eine Vakuumzone ist über eine Vakuum- oder Entgasungsleitung zumindest über einen Vakuumabscheider mit einer Vakuumanlage verbunden. Der Vakuumabscheider selbst umfasst ein Gehäuse mit einem Gaseintritt und einem Gasaustritt, wobei der Gaseintritt in der Vakuumzone und der Gasaustritt mit der Vakuumanlage zumindest mittelbar verbunden sind. Der Vakuumabscheider umfasst im Inneren parallel zueinander verlaufende Kühlrohre, die von einer Reinigungsvorrichtung nach Art eines Schabers umgeben sind, der in Längsrichtung der Kühlrohre hin- und herbewegbar ist, um Ablagerungen auf der Außenseite der Kühlrohre zu entfernen.

Eine Lösungsmittelregenerierungsvorrichtung ist beispielsweise aus JP H07 328301 A bekannt geworden. Die Vorrichtung umfasst einen Einlass in einem unten liegenden Rückhaltebehälter einer Aufheizvorrichtung (Vorwärmer), um das zu behandelnde lösungsmittelhaltige Material zu erwärmen und in Rohre zu verdampfen, die in paraller Anordnung durch die Aufheizvorrichtung hindurch verlaufend angeordnet sind.

Aus der US 3 933 575 A sind eine Vorrichtung und ein Verfahren zum Trennen korrosiver Flüssigkeitsgemische als bekannt zu entnehmen. Das zu separierende Flüssigkeitsgemisch wird von einem Vorratsbehälter in einen Wärmetauscher befördert, so dass es bis nahe an seinen Siedepunkt erwärmt werden kann. Nachfolgend ist eine Verdampfungsstufe vorgesehen, in der die flüssige Phase von der Dampfphase des Flüssigkeitsgemisches getrennt werden kann. Die Verdampfungsstufe weist einen Gehäuseaufbau auf, der beispielsweise aus drei konzentrischen Rohren bestehen kann, von denen das innere Rohr das eigentliche Verdampfungsrohr darstellt. In der Verdampfungsanordnung können mehrere in Umfangsrichtung versetzt zueinander angeordnet Einzelrohre vorgesehen sein, die im Gleichstrom- bzw. Gegenstromprinzip durchströmbar sind.

In den verschiedenen die Durchströmrohre umgebenden Räumen können unterschiedliche erhitzbar fliesfähige Materialien eingebracht werden, um durch parallel zueinander verlaufende Einzelrohre hindurchströmende Flüssigkeitsgemische entsprechend zu erhitzen.

Eine Anlage zu Entfernen von Ablagerungen in einem Behandlungsgas beschreibt zudem die JP 2004 098378 A.

Schließlich soll auch noch auf die WO 2008/110834 A1 verwiesen werden, die einen Vergasungsreaktor mit einer Reinigungsvorrichtung in Form von Wischerklingen umfasst. Damit kann die Innenfläche des Reaktors gereinigt werden. Ein Vergasungsreaktor umfasst ferner ein Abstreifsystem mit mindestens einem Abstreifersegment. Das zumindest eine vorgesehene Schabersegment ist dabei längs der Kondensationsrohre verschiebbar.

Schließlich soll auch noch die DE 196 53 613 A1 erwähnt werden, die ein Verfahren und eine Vorrichtung zum entfernen kondensierbarer, solidisierbarer Bestandteile warmer Abgasströme beschreibt. Da ist ein Mehrmantelrohr vorgesehen, das aus einem nach unten offenen Rohr besteht, welches von einem Kühlmantel umgeben ist. Ferner ist darin ein Innenrohr angeordnet, welches für einen inneren Kühlkreislauf vorgesehen ist. Das Innenrohr ist als Doppelrohr ausgebildet, welches zentral vom Kühlmittel durchströmt wird, welches im unteren Ende austritt und dann in dem dazu konzentrisch verlaufenden Außenrohr nach oben herausgeführt wird. Von daher ist es Aufgabe der vorliegenden Erfindung eine verbesserte Vorrichtung für die Entgasung von Schmelzen zu schaffen, die bestehende Nachteile vermeidet. Insoweit ist es auch Aufgabe der Erfindung, verbesserte Vakuum-Abscheider zu schaffen, um hier Ablagerungen bestehend aus Mischungen von festen, flüssigen und/oder pastösen Komponenten während des Betriebs und innerhalb der Wartungsperioden der gesamten Produktionsanlage zu ermöglichen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine deutlich verbesserte Vorrichtung zur Entgasung von Schmelzen, d.h. insbesondere Polymerschmelzen geschaffen. Dies wird durch eine verbesserte Abscheidevorrichtung ermöglicht.

Zudem lässt sich im Rahmen der Erfindung auch die Wirtschaftlichkeit der mit der erfindungsgemäßen Vorrichtung durchzuführenden Prozesse deutlich verbessern. Ferner lässt sich durch die vorliegende Erfindung auch die Lebensdauer der Vakuumanlage und dabei insbesondere die der in der Vakuumanlage vorgesehene Vakuumpumpe erhöhen und im Stand der Technik bestehende Entsorgungsprobleme beseitigen.

Erfindungsgemäß wird dies unter anderem dadurch ermöglicht, dass Kühlrohre, d.h. sogenannte Tauchrohre verwendet werden, die eine optimale Kühlung und Reinigung ermöglichen.

Die erfindungsgemäßen Kühlrohre sind doppelwandig aufgebaut und ermöglichen einen Kühlprozess an der Außenwandung der Kühlrohre im Gegenstromprinzip. Gekühltes Medium strömt dabei innerhalb der Innenwandung der Kühlrohre von einem zum anderen Ende, um dann über ein in dem Kühlrohr befindliches inneres Rücklaufrohr zurückzuströmen.

Entsprechend formschlüssig am Außenumfang der Kühlrohre ansetzende Reinigungsgeräte beispielsweise in der Form eines Reinigungsschabers können dann verwendet werden, um je nach Bedarf von Zeit zu Zeit die Kühl- oder Tauchrohre zu befreien.

Ebenso kann auch noch eine zweite Kühleinrichtung für den Vakuum-Abscheidebehälter vorgesehen sein, der zu einer zusätzlichen Kühlung beiträgt. Das Reinigungsgerät kann dabei gleichzeitig ebenfalls vorzugsweise formschlüssig an der Innenwandung des Behälters mitverfahren werden, um auch diese Innenwandung ebenfalls von Ablagerungen zu reinigen.

Die Kühlrohre enden bevorzugt frei, insbesondere im Abstand zu einem Boden. Dadurch können die am Außenmantel der Kühlrohre anhaftenden festen, pastösen oder flüssigen Ablagerungen optimal nach unten hin in Richtung einer Auffangeinrichtung abgestreift werden.

Als günstig hat sich ferner erwiesen, wenn die verunreinigten Abgase dem Vakuum-Abscheider über einen untenliegenden Gaseintritt zugeführt und über einen oben liegenden Gasaustritt wieder abgeführt werden. Der Gaseintritt kann dabei bevorzugt unterhalb der unten liegenden vorzugsweise freien Enden der Kühlrohre vorgesehen sein. Dadurch wird ebenfalls vermieden, dass bei Einströmung der Gase im Gegensatz zum Stand der Technik die im Gasstrom befindlichen und an den Kühlrohren anhaftenden Ablagerungen im unteren Bereich der Kühlanordnung zu einem Zusetzen des Strömungsraumes führt, wodurch das benötigte Vakuum sehr viel schneller unterbrochen wäre. Von daher ist im Stand der Technik bisher stets vorgesehen, dass der Gasein- und Gasaustritt in dem Abscheidebehälter stets auf nahezu gleicher Höhe stattfindet, insbesondere in dessen oberen Bereich. Denn würden sich die im Stand der Technik vorgesehenen Rohrbündel durch die Ablagerungen zusetzen, so würde die Effizienz der Abscheidung verringert werden. Nicht abgelagerte Stoffe würden dadurch in einem zwei- oder mehrstufigen Filterungsverfahren dann auch noch zur nächsten Filterstufe gelangen, um beispielsweise die dort in der zweiten Filterstufe verwendeten Taschenfilter zuzusetzen. Denn ein Gaseintritt im unteren Bereich des Abscheide-Behälters würde bei nach dem Stand der Technik bekannten Lösungen zu einem sehr schnellen und frühzeitigen Zusetzen der dort vorgesehenen Rohrbündel führen.

Der untere Gaseintritt hat zudem den Vorteil, dass flüssige und feste Bestandteile im Gasstrom zumindest teilweise schon über die Schwerkraft ausgeschieden werden können, ohne dass die im Stand der Technik vorgesehenen Rohrbündel im Bereich des unteren Gaseintrittes der Gefahr unterliegen, durch diese Stoffe zugesetzt zu werden. Bevorzugt können diese Bestandteile in den Aufnahmebereich auf den Behälterboden fallen und durch eine vorzugsweise unten oder seitlich vorgesehene Reinigungsöffnung automatisch oder manuell entfernt werden.

In einer bevorzugten Ausführungsform ist oberhalb der Reinigungsöffnung noch eine Trenneinrichtung oder ein so genannter Trennschott vorgesehen, der es unter Aufrechterhaltung des Vakuums in dem Vakuum-Abscheider ermöglicht, die Auffangeinrichtung zu entleeren, in welcher die festen, pastösen oder fließfähigen Stoffe während des Betriebes und/oder Reinigungsvorganges abgelagert wurden. Bevorzugt werden die Kühlrohre von unten her angeströmt. Ein wesentlicher Vorteil liegt dabei in der maximalen Ausnutzung der an der Wärmeübertragung beteiligten Flächen. Die freie vertikale Anströmung verhindert zudem, dass Verschmutzungsrückstände den Anströmquerschnitt in diesem Bereich verengen, wie dies ansonsten bei einer horizontalen Anströmung der Fall wäre. Von daher sind die Kühlrohre bevorzugt vertikal angeordnet oder weichen um weniger als 45°, insbesondere um weniger als 30° oder weniger als 15° von der Vertikalen ab.

Zusammenfassend kann also festgehalten werden, dass im Rahmen der Erfindung unter anderem auch das Ziel verfolgt wird, die Verfügbarkeit des zumindest einen oder der mehreren Abscheider zu verlängern. Die im Rahmen der Erfindung speziell vorgesehene Lösung mit einer nach unten abgesetzten Anordnung der Wärmetauschrohe in Tauchrohrausführung erlaubt ein Abreinigen der kompletten Wärmetauscheroberflächen.

Herkömmliche Rohrbündel sind nach unten durch Rohrbogen, bzw. Sammelplatten geschlossen. Eine Abreinigung der Oberflächen wird dadurch behindert, dass die Schmutzrückstände an diesen horizontalen Flächen bzw. Absätzen zurückgehalten und die Rohre somit nur unvollständig abgereinigt werden. Folge davon ist eine Reduzierung der Standzeit des Abscheiders durch eine zunehmende Reduzierung der Anströmfläche.

Die spezielle Anordnung der Rohre des Wärmetauschers stellt eine Fläche ähnlich konventioneller Rohrbündel zur Verfügung, ermöglicht aber die Abreinigung der kompletten Oberfläche mit einer einfachen mechanischen Vorrichtung. In dieser speziellen Anordnung können die abgeschiedenen Gasbestandteile rückstandsfrei aus dem Prozessraum abgeführt werden.

Im Prinzip schlägt die Erfindung eine Reinigungsvorrichtung vor, die nach Bedarf manuell, motorisch oder pneumatisch geregelt werden kann, bei der ein Reiniger von seiner oberen Position in seine untere Position verfahren werden kann, um die flüssigen, pastösen wie festen und/oder pulverförmigen Abscheidungen gegen den Behälterboden abzustreifen. Die Krafteinleitung erfolgt über geeignete Antriebe, die grundsätzlich nach dem Stand der Technik bekannt sind. Ein im Rahmen der Erfindung verwendeter Abstreifer kann zudem auch segmentiert aufgebaut sein, um eine kontinuierliche Reinigung auch ohne Redundanz zu gewährleisten. Bei nicht redundanter Ausführung wird bevorzugt über versetzt angeordnete Abstreifer oder Abstreifer-Platten eine Teilabreinigung erzielt und zugleich gewährleistet, dass für die Strömung immer ein ausreichend großer Querschnitt geöffnet bleibt. Bei redundanter Ausführung der Abscheider kann eine komplette Abreinigung der temperierten Rohre mit einer speziellen, den Rohren angepassten Platte erfolgen. Die spezielle Anordnung der temperierten Rohre ermöglicht eine optimale Reinigung, ohne dass Verschmutzungsrückstände an horizontalen Flächen oder Absätzen zurückgehalten werden.

Weitere Vorteile, Einzelheiten und Merkmale der Erfindung ergeben sich aus den anhand von Zeichnungen erläuterten Ausführungsbeispielen. Dabei zeigen im Einzelnen:
- Figur 1:: eine schematische Gesamtansicht einer erfindungsgemäßen Vorrichtung zum Entgasen von Polymerschmelzen;
- Figur 2:: eine Detailwiedergabe einer schematischen Vertikalschnittdarstellung durch einen erfindungsgemäßen Vakuum-Abscheider insbesondere bei redundanter Auslegung;
- Figur 3:: ein zu Figur 2 abweichendes Ausführungsbeispiel eines Vakuum-Abscheiders insbesondere bei nicht redundanter Auslegung; und
- Figur 4:: eine nochmalige abweichende Darstellung zu dem Ausführungsbeispiel nach Figur 2 und 3 bezüglich eines erfindungsgemäßen VakuumAbscheiders insbesondere bei nicht redundanter Auslegung, der dazu zwei Antriebe umfasst.

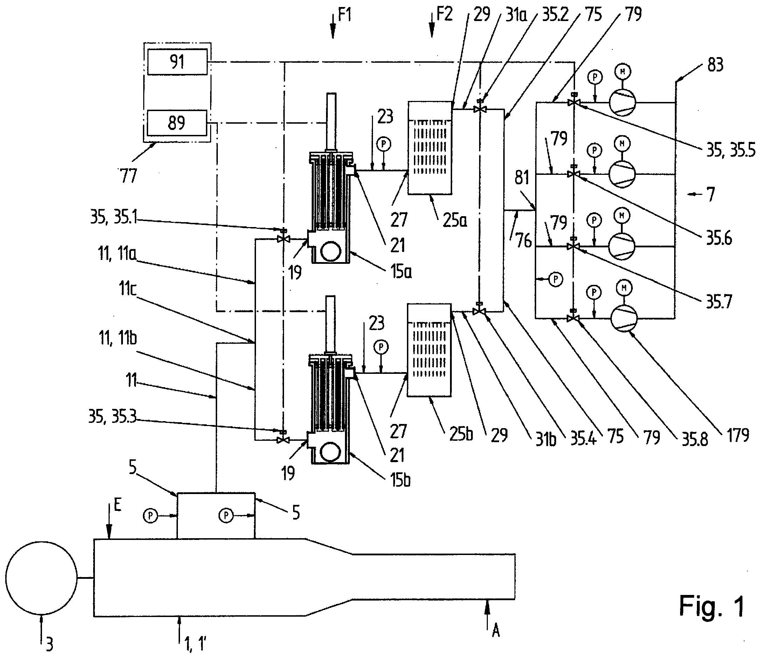

Nachfolgend wird zunächst unter Bezugnahme auf Figur 1 der grundsätzliche Gesamtaufbau der Vorrichtung zum Entgasen von Polymerschmelzen erläutert.

Die Gesamtanlage umfasst eine Plastifiziereinheit 1 in der Regel in Form eines Extruders 1', der beispielsweise von einem Motor 3 angetrieben wird.

Über einen in Figur 1 nicht näher dargestellten Einfülltrichter z.B. in einem Zufahrbereich E kann diese Plastifiziereinheit 1 mit festem oder flüssigem Kunststoff versorgt werden.

Dem Kunststoff werden üblicherweise flüssige und/oder feste Additive beigegeben. Dies kann zum Beispiel bereits im Bereich des Einfülltrichters geschehen. Bei manchen Anwendungen kann die Vermischung von Kunststoff und Additiven aber auch extern schon vor Eingabe in den Trichter erfolgen, also vor Einführung zu der Plastifiziereinheit 1.

Bei den zugegebenen Additiven kann es sich um verschiedene chemische Rezepturen handeln, z.B. um Weichmacher, Antistatika, Pinning-Additive usw..

Eine entsprechende Plastifiziereinheit 1 beispielsweise in Form eines Extruders 1' umfasst wie bekannt üblicherweise zumindest eine oder in der Regel 2 (oder mehrere) Plastifizierungs-Schnecken. Diese in Figur 1 nicht näher dargestellte zumindest eine Plastifizierungs-Schnecke der Plastifiziereinheit 1 ermöglicht gegebenenfalls unter Mithilfe von Heizeinrichtungen oder Heizbändern, dass der der Plastifiziereinheit 1 zugeführte Kunststoff auf- und gegebenenfalls mit dem zugeführten Additiv vermischt wird. Gleichzeitig wird der Kunststoff geschmolzen. Die Kunststoffschmelze gelangt in den Bereich einer oder mehrerer Vakuumzonen 5 der gesamten Anlage. Allgemein gesprochen steht der von der Schmelze befüllte Innenraum der Plastifiziereinheit 1 über eine entsprechende Öffnung im Gehäuse mit einer Vakuumzone 5 in Verbindung. Letztlich wird der der Plastifiziereinheit beispielsweise an dem erwähnten Eingang E zugeführte Kunststoff dann in geschmolzener Form an einem Ausgang A abgegeben.

In der erwähnten einen oder den gegebenenfalls vorgesehenen mehreren Vakuumzonen 5 wird die Schmelze entgast. Hierzu ist eine Vakuum- und/oder Entgasungsleitung 11 vorgesehen. Hierüber wird eine Verbindung zwischen der Vakuumzone 5 über nachfolgend noch erörterte weitere Filterstufen und Einrichtungen sowie über weitere Leitungsabschnitte mit der bevorzugt mehrere Vakuumpumpen umfassenden Vakuumanlage 7 hergestellt. Die im gezeigten Ausführungsbeispiel nach Figur 1 bis zu den dort beschriebenen beiden Vakuum-Abscheidern 15 führende Vakuum- und/oder Entgasungsleitung 11 kann zudem temperiert werden, beispielsweise auf eine Temperatur von 150°C bis 300°C, um eine Kondensation (und/oder Sublimation) der Abgase bereits in dieser Rohrleitung weitestgehend auszuschließen. Die Vakuumleitung zeichnet sich zudem dadurch aus, dass durch eine spezielle Vorrichtung (Schmelzefalle) das Eindringen von Schmelze aus der Plastifiziereinheit in die Vakuumleitung verhindert wird.

Der vorstehend erwähnte und in Figur 1 schematisch dargestellte Vakuum-Abscheider 15 dient primär zum Ausfiltern von Feststoffen, gegebenenfalls aber auch zum Abscheiden von flüssigen oder zumindest zäh-fließfähigen, pastösen Stoffen und Substanzen.

Im gezeigten Ausführungsbeispiel - was nicht zwingend aber vorteilhaft ist - ist der Gesamtaufbau der Anlage redundant vorgenommen.

Dazu sind in dem anhand von Figur 1 erläuterten Ausführungsbeispiel nicht nur ein Vakuum-Abscheider 15 sondern zwei Vakuum-Abscheider 15a und 15b vorgesehen, die über zwei Vakuum-Entgasungsleitungen 11, 11a und 11b direkt mit der Vakuumzone 5 (oder mit unterschiedlichen Vakuumzonen 5) verbunden sein können, oder die wie im gezeigten Ausführungsbeispiel an einer Verzweigungsstelle 11c in die beiden parallel verlaufenden Vakuum-Entgasungsleitungen 11, 11a, 11b übergehen, die zu den beiden Vakuum-Abscheidern 15a, 15b führen.

Der Aufbau des Vakuum-Abscheiders 15, 15a, 15b wird nachfolgend noch im Detail erläutert.

Aus Figur 1 ist bereits zu entnehmen, dass jede der Vakuum- und/oder Entgasungsleitungen 11, 11a, 11b zu einem Gaseintritt 19 führt. Ein solcher Vakuum-Abscheider kann auch als Sublimations- und/oder Kondensat-Abscheider 15 bezeichnet werden. In diesem Abscheider 15 werden die dampfförmigen Bestandteile des Gases an einer erfindungsgemäßen nachfolgend noch im Einzelnen erörterten speziellen Anordnung abgeschieden, d.h. insbesondere kondensiert. Dadurch lassen sich Feststoffe und gegebenenfalls fließfähige oder zäh-fließfähige Stoffe aus dem Gas abscheiden.

Der oder die vorstehend erwähnten Vakuum-Abscheider 15, 15a, 15b stellen quasi eine erste Filterstufe F1 dar, die wie erwähnt bevorzugt redundant ausgelegt ist, um in den Wartungsintervallen eine Entnahme von festen, pastösen und flüssigen Abfallstoffen problemlos zu ermöglichen. Die insoweit gereinigten Abgase können dann über einen Gasaustritt 21 an dem jeweiligen Vakuum-Abscheider 15 über eine entsprechende Verbindungsleitung 23 einer nachgeordneten zweiten Filterstufe F2 zugeführt werden. Im gezeigten Ausführungsbeispiel ist auch die Filterstufe F2 redundant aufgebaut und umfasst jeweils eine zweite Filterstufe F2, die über jeweils eine Verbindungsleitung 23 dem jeweiligen Vakuum-Abscheider 15a bzw. 15b nachgeordnet ist.

Beide redundanten, d.h. im gezeigten Ausführungsbeispiel parallel zueinander vorgesehenen und jeweils mit dem vorgeschalteten Vakuum-Abscheider 15a, 15b in Verbindung stehende Filter 25, d.h. Filter 25a und Filter 25b der zweiten Filterstufe F2 reinigen die Abgase nochmals. Das über deren Gaseintritt 27 zugeführte und bereits teilweise durch die Vakuumstufe vorgereinigte Gas durchläuft diese Filterstufe, um dann an dem zugehörigen Gasaustritt 29 über jeweils eine Austrittsleitung 31, d.h. im gezeigten Ausführungsbeispiel Austrittsleitung 31a bzw. 31b der eigentlichen Vakuumanlage 7 zugeführt zu werden, über die die Gase abgepumpt werden. Auch auf deren Aufbau wird nachfolgend noch im Detail eingegangen.

Das Gesamtsystem ist jeweils wie erwähnt bevorzugt redundant ausgelegt, um in den Wartungsintervallen eine Entnahme der festen, pastösen und flüssigen Abfallstoffe zu ermöglichen. Die Steuerung der Anlage kann dabei beispielsweise über Ventile 35 erfolgen, und zwar mittels einer dem Fachmann grundsätzlich geläufigen Regelung, die Teil eines gesamten zentralen Steuerungssystems ist.

### Konstruktion des Abscheiders

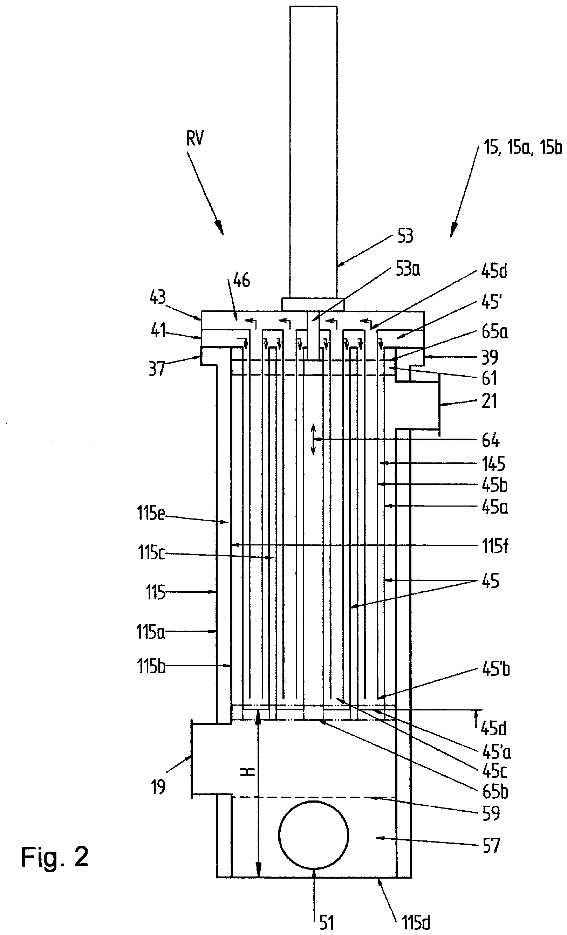

Nachfolgend wird anhand von Figur 2 ein erstes Ausführungsbeispiel für einen erfindungsgemäßen Vakuum-Abscheider 15 erläutert.

Der gezeigte Vakuum-Abscheider 15, 15a oder 15b umfasst ein doppelwandiges Vakuum-Abscheidergehäuse 115, welches eine äußere Behälterwand 115a und eine im Abstand dazu liegende innere Behälterwand 115b umfasst. Über dieses Doppelwand-System wird ein Gehäuse-Zwischenraum 115e geschaffen, worüber das Vakuum-Abscheidergehäuse 115 mittels eines umströmenden flüssigen Kühlmediums temperiert werden, d.h. gekühlt werden kann. Das Kühlmedium kann dabei über einen Kühlmittel-Zulauf 37 dem Gehäuse-Zwischenraum 115e des doppelwandigen Gehäuses 115 zugeführt werden, wobei es über einen Kühlmittel-Ablauf 39 abströmen kann. Sowohl der Kühlmittel-Zulauf 37 wie der Kühlmittel-Ablauf 39 können beispielsweise wie im gezeigten Ausführungsbeispiel nach Figur 2 im oberen Bereich des Vakuum-Abscheidegehäuses 115 vorgesehen sein, vorzugsweise an gegenüberliegenden Seiten des Gehäuses.

Zudem ist ein weiterer Kühlmittel-Zulauf 41 und ein weiterer Kühlmittel-Ablauf 43 vorgesehen, der zur Kühlung von mehreren im Behälter-Innenraum 115c in Parallelausrichtung zueinander verlaufenden Kühlrohren 45 dient, die ebenfalls mittels eines flüssigen Kühlmittels temperiert, d.h. gekühlt werden. Als Temperiermittel können sowohl zur Kühlung des doppelwandigen Behälters wie zur Kühlung der Kühlrohre alle bekannten Kühlmedien und Stoffe verwendet werden, einschließlich Temperaturgradienten ausgleichende Medien sowie Medien auf Basis von Verdampfungskühlungen etc.. Beschränkungen bestehen insoweit nicht. Ebenso ist es auch möglich, dass das Kühlmittel für die Kühlung der Außenwandung des Behälters wie für die Kühlrohre über einen gemeinsamen Zulauf zugeführt und einen gemeinsamen Ablauf abgeführt werden. Beliebige andere Zusammenschaltungen des Zulaufs oder des Ablaufs sind möglich.

Die Kühlrohre 45 sind als Doppel-Rohre aufgebaut und umfassen jeweils ein Außenrohr 45a und ein im Abstand dazu angeordnetes im Inneren des Außenrohrs 45a befindliches Innenrohr 45b mit geringerem Außendurchmesser als der Innendurchmesser des Außenrohres 45a. Das Außenrohr 45a ist an seinem unteren Ende 45'a verschlossen, wobei das untere Ende 45'b des Innenrohrs 45b im Abstand vor dem unteren Verschlussboden 45'a des Außenrohres offen endet. Dadurch wird eine Umströmverbindung 45c geschaffen, die es erlaubt, dass entsprechendes Kühlmedium über den Kühlrohr-Kühlmittelzulauf 41 bevorzugt am oberen Ende 45' der Kühlrohre 45 in das Außenrohr strömen und das Außenrohr 45c in Längsrichtung durchströmen kann, also in dem Abstandsraum 145 zwischen der Innenwandung des Außenrohres 45a und der Außenwand des Innenrohres 45b. Das Kühlmedium strömt dann bis zum unteren Ende 45'b des Innenrohres 45b und von dort über die Umströmverbindung 45c in das Innenrohr 45b, um im Innenrohr 45b in entgegengesetzter Richtung nach oben aufzusteigen. Über die am oberen Ende befindliche Rückströmöffnung 45d kann dann das Kühlmedium in einen gemeinsamen Kühlkreislauf zurückgeführt werden, im gezeigten Ausführungsbeispiel über entsprechende Verbindungsstellen in eine gemeinsame Rückführleitung 46, die zu dem erwähnten Kühlmittel-Ablauf 43 führt. Grundsätzlich könnte das Kühlmittel auch über das Innenrohr zugeführt und am unteren Ende im Inneren des Außenrohres aufsteigen. Allerdings wird die umgekehrte Variante zur Erzielung eines besseren Kühleffektes bevorzugt.

Aus dem Ausführungsbeispiel ist auch ersichtlich, dass die Kühlrohre 45 bevorzugt vertikal verlaufend angeordnet sind, wobei sie grundsätzlich auch zumindest leicht geneigt aber parallel zueinander verlaufend angeordnet sein können. Die Neigung in Abweichung zur Vertikalausrichtung sollte aber nicht mehr als 45°, vorzugsweise weniger als 30° und insbesondere weniger als 15° betragen.

Die erwähnten parallel zueinander verlaufenden Kühlrohre bilden dabei einen so genannten Rohrbündel-Wärmetauscher, wobei die von dem Rohrbündel-Wärmetauscher umfassten Kühlrohre 45 insoweit auch als Tauchrohre 45 bezeichnet werden.

Im gezeigten Ausführungsbeispiel enden die am unteren Ende verschlossenen Kühlrohre in einem Abstand H (Figur 2) vor dem unteren Behälterboden 115d. In diesem Behälterboden 115d oder in einem Seitenwandabschnitt des Gehäuses 115 vorzugsweise im Bereich unterhalb der durch die verschlossenen Kühlrohre 45 gebildeten Unterkante 45d befindet sich eine Reinigungsöffnung 51, um bei Bedarf die abgeschiedenen festen, pastösen und/oder flüssigen Stoffe gegebenenfalls auch zähflüssigen Stoffe aus dem Behälter zu entfernen.

Der bereits erwähnte Gaseintritt 19 liegt im gezeigten Ausführungsbeispiel unterhalb des unteren Endes der Kühlrohre 45, also unterhalb der Unterkante 45d der Kühlrohre 45. Der Gasaustritt ist demgegenüber eher im oberen Bereich des Gehäuses 115 vorgesehen, vorzugsweise in einem Bereich, der im oberen Viertel der Gesamthöhe des Vakuum-Abscheide-Gehäuses 115 liegt.

Nachfolgend wird auf die Wirkungsweise dieser AbscheideEinrichtung eingegangen.

Die verunreinigten Abgase gelangen über die erwähnte Vakuum- und/oder Entgasungsleitung oder -Leitungen 11, 11a und 11b (die gegebenenfalls auch zusätzlich temperiert sein können) und dem jeweiligen nachfolgenden Gaseintritt 19 in den Vakuum-Abscheider 15, 15a, 15b. Der Gaseintritt 19 erfolgt also an der Unterseite des Vakuum-Abscheiders bzw. im unteren Bereich des Vakuum-Abscheiders 15. Im gezeigten Ausführungsbeispiel liegen die erwähnten Kühl- oder Tauchrohre 45 nicht in unmittelbarer Einströmrichtung, also nicht benachbart zum Gaseintritt 19 sondern oberhalb davon. Dadurch wird zunächst schon vermieden, dass sich die erwähnten Rohrbündel aus den erwähnten Kühlrohren 45 in unerwünschter Weise durch die im Gasstrom enthaltenen Stoffe zusetzen können, wodurch die Effizienz der Abscheidung verringert werden würde.

Der erwähnte unten liegende Gaseintritt 19 hat ferner den Vorteil, dass im Gasstrom befindliche flüssige und feste Bestandteile bereits über die Schwerkraft ausgeschieden werden können und sich in der unterhalb der Kühlrohre befindlichen Auffangeinrichtung oder dem Auffangraum 57 absetzen, ohne die Kühlrohre 45 zuzusetzen. Mit anderen Worten fallen diese Bestandteile also auf den Behälterboden 115d, zu dem in einer Seitenwand des Gehäuses 115 benachbart die beispielsweise durch einen Deckel oder eine Klappe verschließbare Reinigungsöffnung 51 liegt. Grundsätzlich möglich wäre auch einen so genannten Trennschott 59 vorzusehen, der in Figur 2 strichliert eingezeichnet ist, und der zum einen oberhalb der Reinigungsöffnung 51 und zum anderen unterhalb des Gaseintritts 19 liegt, um eine Abreinigung der Abschlagstoffe auch während des Betriebs zu ermöglichen.

Dieser Trennschott 59, also die entsprechende Trenneinrichtung 59 könnte bei Bedarf also vakuumdicht verschlossen werden, um die Reinigungsöffnung 51 zu öffnen und die abgelagerten Stoffe aus dem Auffangraum 57 auch während des Betriebs zu entfernen, also ohne dass das Vakuum in den Leitungen und in den Filterstufen zusammenbricht. Anschließend kann die Öffnung 51 wieder verschlossen und der Trennschott 59 wieder geöffnet werden.

Da zudem die Anströmung der Kühlrohre durch das Gas von unten nach oben hin erfolgt, also zumindest näherungsweise oder fast über die gesamte Länge der Kühlrohre 45, ergibt sich eine maximale Ausnützung der Wärmeübertragung an den beteiligten Flächen. Die freie vertikale Anströmung verhindert zudem, dass Verschmutzungsrückstände den Anströmquerschnitt in diesem Bereich verengen können, wie dies bei einer horizontalen Anströmung ansonsten der Fall wäre.

Während der Durchströmung des Vakuum-Abscheiders 15 von dem unten liegenden Gaseintritt 19 parallel zu der Innenwand des doppelwandigen Gehäuses 115 und parallel zu den Außenumfangsflächen der mehreren Kühlrohre 45 wird der Gasstrom insgesamt deutlich gekühlt, was dazu führt, dass sich im Gasstrom befindliche Feststoffe an der Oberfläche der Kühlrohre absetzen (sofern sie nicht gleich vertikal nach unten in den Sammelraum 57 fallen). Ebenso können sublimierte und/oder kondensierte Stoffe sich in Festform oder in fließfähiger Form, gegebenenfalls auch in zäh-fließfähiger und damit pastöser Form an der Oberfläche der Kühlrohre 45 absetzen, bevor das insoweit teilgereinigte Gas dann über den oben liegenden Gasaustritt 21 der zweiten Filterstufe F2 zugeführt wird.

### Vorrichtung zur Abreinigung der Wärmetauscherrohre

Um einen kontinuierlichen Betrieb der Vorrichtung zur Abscheidung flüssiger, pastöser sowie fester und/oder pulverförmiger Bestandteile eines aus dem Verfahrensteil eines Extruders 1' oder allgemein einer Plastifiziereinheit 1 über das aufgebaute Vakuum abgezogenen Prozessgases bei verringerten Wartungsintervallen zu gewährleisten, ist eine spezifische Abreinigungsvorrichtung für die Wärmeaustauschrohre vorgesehen.

Ferner ist in Figur 2 auch noch eine Reinigungsvorrichtung RV mit einem Reinigungsantrieb 53 gezeigt, worüber eine axial ein- und ausfahrbare Betätigungsstange 53a verfahren werden kann, an der eine Schaber- oder eine Abstreifer-ähnliche Betätigungseinrichtung 61 befestigt ist, die nachfolgend teilweise auch kurz als Schaber oder Abstreifer 61 bezeichnet wird. Dieser Schaber oder Abstreifer 61 ist formschlüssig an den Außenumfang und die Lage der Kühlrohre 45 und bevorzugt auch an die Innenkontur, d.h. die Innenwandung 115f des Vakuum-Abscheidegehäuses 115 angepasst. Es handelt sich dabei beispielsweise um eine platten- oder messerförmige Betätigungseinrichtung 61, die beispielsweise dem Durchmesser und der Querschnittsform der Kühlrohre 45 angepasste Ausnehmungen sowie eine umlaufende Begrenzungskante aufweist, die an die Innenwandung des Behälters 115 angepasst ist. Diese Reinigungsvorrichtung RV könnte theoretisch auch manuell betätigt werden. Bevorzugt wird sie motorisch oder pneumatisch angetrieben. Dazu umfasst die Reinigungsvorrichtung RV den bereits erwähnten Reinigungs-Antrieb 53, der mit einer axial vorstehenden und parallel zu den Kühlrohren 45 verlaufenden Betätigungsstange 53a versehen ist, an deren unterm Ende der erwähnte Schaber oder Abstreifer 61 vorgesehen ist. Über diesen Antrieb kann der Schaber oder Abstreifer 61 entsprechend der Doppelpfeildarstellung 64 in Figur 2 parallel zur axialen Erstreckungsrichtung der Kühlrohre 45 auf und ab bewegt werden, nämlich von seiner in Figur 2 einmal eingezeichneten oberen Position 65a bis in seine untere Position 65b im Bereich des unteren Endes der Kühlrohre 45 oder auch über deren Ende nach unten hinaus, wobei die an der Außenwandung der Kühlrohre 45 sowie an der Innenwandung des Behälters 115 befindlichen flüssigen, pastösen sowie festen und/oder pulverförmigen Abscheidungen gegen den Behälterboden 115d abgestreift werden. Der Abstreifer 61 kann dazu wie erwähnt plattenförmig ausgebildet sein.

Um einen kontinuierlichen Betrieb der gesamten Anlage gewährleisten zu können, sind unterschiedliche Detaillösungen möglich.

In einer bevorzugten Variante ist dazu der Aufbau der Anlage redundant, wie in Figur 1 dargestellt, und umfasst dazu die zumindest beiden Vakuum-Abscheider 15a, 15b, die im Parallelbetrieb eingesetzt werden. Dabei kann jeweils in Zeitabständen ein Vakuum-Abscheider 15a oder 15b durch ein vorgeschaltetes und nachgeschaltetes Ventil 35.1, 35.2 35.3, 35.4 gegebenenfalls gemeinsam mit der nachgeordneten zweiten Filterstufe F2 abgeschaltet werden, um den Vakuum-Abscheider zu reinigen. Dabei wird die Reinigungsvorrichtung RV in Gang gesetzt und die entsprechenden Stoffe von den Kühlrohren und der Innenwandung des Gehäuses abgestreift, die sich dann in dem Auffangbereich 57 sammeln. Durch Öffnen der verschließbaren Klappe 51 können dann diese Stoffe aus dem Vakuum-Abscheider entfernt werden. Der jeweils zweite Vakuum-Abscheider läuft dabei im Betrieb weiter. Bei Bedarf kann dann der jeweils andere Vakuum-Abscheider entsprechend gereinigt werden.

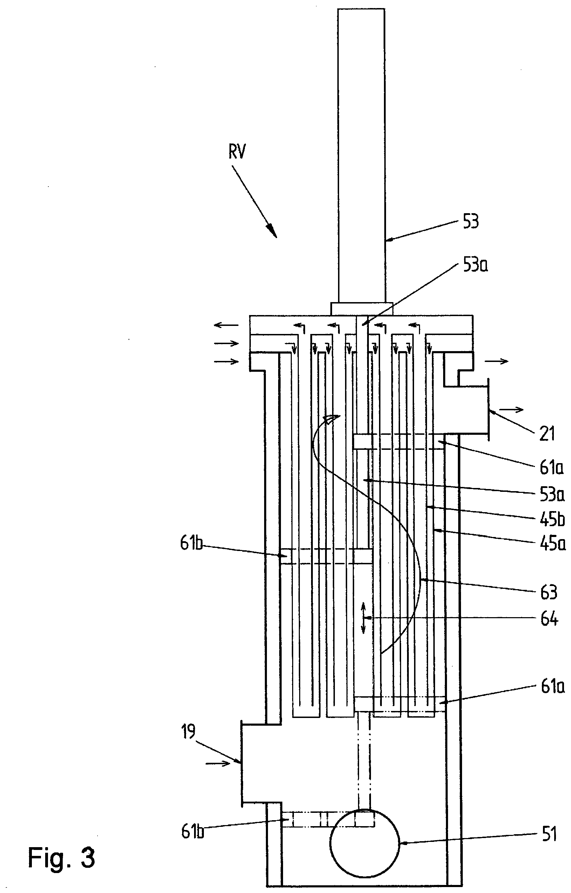

Wenn abweichend von dem Ausführungsbeispiel gemäß Figur 1 und 2 beispielsweise nur ein einziger Vakuum-Abscheider 15 vorgesehen ist, empfiehlt sich eine Ausführungsform gemäß der Darstellung nach Figur 3. Dort ist der Abstreifer 61 zumindest zweigeteilt und umfasst einen Abstreifer 61a und einen weiteren Abstreifer 61b. Jeder der beiden Abstreifer 61a und 61b ist beispielsweise der Hälfte der Innenwandung 115f des Gehäuses 115 und der Hälfte der Kühlrohre 45 zugeordnet. Dabei sind die beiden segmentierten Abstreifer-Teile 61a und 61b zwar an der gemeinsamen Betätigungsstange 53a befestigt und werden über den gemeinsamen Reinigungsantrieb 53 angehoben und abgesenkt. Allerdings sind die beiden Teil-Abstreifer 61a und 61b in Verschieberichtung 64 versetzt zueinander liegend in unterschiedlicher Höher an der Betätigungsstange 53a befestigt. Dadurch kann - wie in Figur 3 dargestellt ist - mit der Reinigungsvorrichtung die Kühlstäbe und die Innenwandung des Gehäuses durch den Abstreifer oder Schaber 61 gereinigt werden, wobei gleichwohl ein ständiger Strömungskanal zwischen dem Gaseintritt 19 und dem Gasaustritt 21 freiliegend gegeben ist, beispielsweise entlang des in Figur 3 gezeigten Strömungsweges 63. Denn bei Verwendung eines Vakuum-Abscheiders entsprechend dem Ausführungsbeispiel nach Figur 2 unter Verwendung eines beispielsweise plattenförmigen Abstreifers kann bei Betätigung der Reinigungsvorrichtung dieser Vakuum-Abscheider nicht benutzt werden, da bei Absenken der Platten beispielsweise einer plattenförmigen Abstreifeinrichtung der Strömungsweg zwischen Gaseinlass 19 und Gasaustritt 21 unterbrochen wäre. Bei der Variante gemäß Figur 3 liegt zumindest immer der Strömungsweg bezüglich der halben Kühlrohr-Anordnung frei.

Der Höhenversatz zwischen den beiden Abstreiferteilen 61a und 61b ist so bemessen, dass nicht nur das in Figur 3 links liegende und tiefer an der Betätigungsstange 53a angebrachte Abstreifer-Teil 61a, sondern auch das rechts liegende und an sich an der Betätigungsstange 53a höher liegend befestigte Abstreifer-Teil 61a bis zum unteren Ende der Kühlrohre 45 verschoben werden kann, also noch ein gewisses Stück weiter als in der zweiten Positionsdarstellung bezüglich der beiden Abstreifer 61a und 61b in Figur 3, wobei diese tiefer liegende Darstellung die beiden Abstreiferteile 61a und 61b noch vor Erreichen ihrer tiefsten Position zeigen.

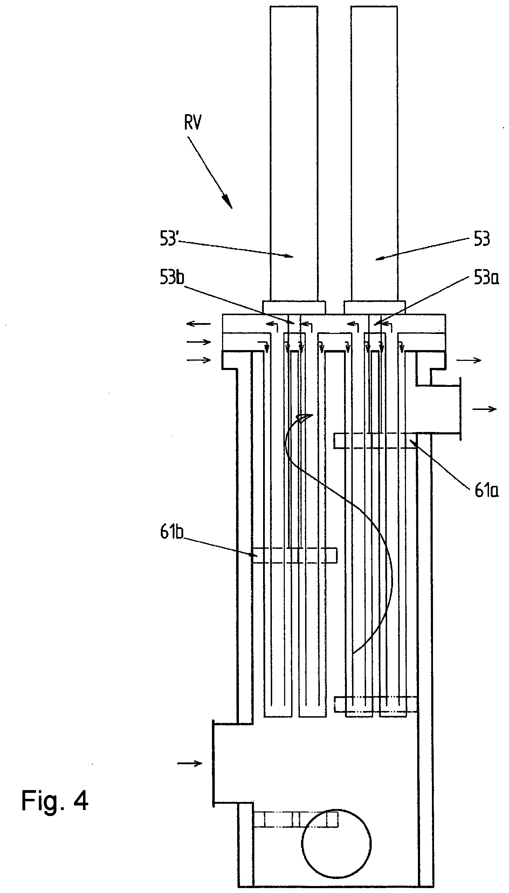

Bei der Ausführungsform gemäß Figur 4 ist eine Variante gezeigt, bei der zwei Reinigungsantriebe 53 und 53' vorgesehen sind, nämlich mit jeweils einer zugehörigen Betätigungsstange 53a und 53'a. An jeder Betätigungsstange ist dann jeweils eine Abstreifer-Hälfte 61a bzw. 61b angebracht. Jede der beiden beispielsweise plattenförmigen Abstreifer-Hälften 61a, 61b können unabhängig voneinander betätigt werden. Dazu kann zunächst die eine Hälfte der Kühlrohre und die eine Hälfte der Innenwandung des Gehäuses durch Betätigung des ersten Reinigungsantriebes 53 gereinigt werden und wenn die zugehörige Abstreifer-Hälfte 61a in ihre angehobene Position zurückverfahren ist, kann dann die zweite Reinigungsvorrichtung aktiviert werden, um mittels der zweiten Abstreifer-Hälfte 61b die verbleibenden Kühlrohre und die verbleibende Innenwandung des Gehäuses zu reinigen. Stets der halbe Querschnitt im Inneren des Gehäuses bleibt während des Reinigungsvorganges frei liegend, so dass hier das Gas wie erläutert längs der Kühlrohre vom Gaseintritt 19 zum Gasaustritt 21 strömen kann. Unabhängig von der vorstehend erläuterten Schilderung können die einzelnen Abstreifer-Hälften 61a und 61b auch in beliebigen anderen Mustern unabhängig voneinander bewegt werden, wobei die Bewegung bevorzugt so erfolgt, dass möglichst zu keinem Zeitpunkt beide Abstreiferhälften in gleicher Höhenlage zu liegen kommen, und in dieser Phase den freien Durchströmungs-Querschnitt verschließen würden.

Nach erfolgter Reinigung kann dann beispielsweise durch den erwähnten Trennschott 59 der Auffangbereich 57 nach oben hin vakuumdicht verschlossen werden, so dass bei weiterer Durchströmung des Gases vom Gaseintritt zum Gasaustritt unter Aufrechterhaltung des Vakuums oder des Unterdrucks der Auffangraum geöffnet und das darin befindliche Material entnommen werden kann.

### Weiterer Ablauf des Betriebsverfahrens

Geht man im Folgenden davon aus, dass sich im laufenden Betrieb die Wärmetauscherrohre durch zunehmend anwachsende Ablagerungen zusetzen, könnte der nachfolgend beschriebene Betriebsablauf umgesetzt werden. Dazu sind eine Reihe von Sensoren P innerhalb der in Figur 1 gezeigten Rohrleitungen, der Ventile, der Abscheider, der Filter und/oder der Vakuumpumpen selbst vorgesehen (beispielsweise durch die Motor-Moment-Messung). Wird entsprechend den Messdaten eine Regelschwelle über- oder unterschritten, können entsprechende Regelsignale ausgelöst werden.

So kann beispielsweise eine Differenzdruckmessung vorgesehen sein, die unmittelbar den Grad der Verschmutzung an den Kühlrohren 45, also den Tauchrohren, bzw. im Kondensatabscheider messen können.

Dazu sind entsprechend der Darstellung nach Figur 1 die beiden parallel betriebenen Filter 25a, 25b in der zweiten Filterstufe F2 über Filterausgangsleitungen 75 zusammengefasst, so dass das Gas über eine weitere gemeinsame Verbindungsleitung 76 zu einer Verzweigungsstelle 81 und von dort über parallele Vakuumleitungen 79 zu motorbetriebenen Vakuumpumpen 179 und hierüber beispielsweise zu einem gemeinsamen Abgas-Sammelrohr 83 strömen kann. In diesen parallel zueinander verlaufenden Vakuumleitungen 79 sind jeweils ein Ventil 35.5, 35.6, 35.7 und 35.8 geschaltet, wobei zwischen dem Ventil und der jeweils motorbetriebenen Vakuumpumpe wiederum einer der erwähnten Drucksensoren P vorgesehen ist.

Durch die erwähnte Regelungsschaltung 77 ist es nunmehr möglich, dass beispielsweise bei redundanter Auslegung die Ventilsteuerungen, d.h. die Ventile 35.5 - 35.8 zur Umschaltung auf das jeweils Redundant-System betätigt werden. Ebenso kann jeweils eines der beiden Ventil-Paare 35.1, 35.2 bzw. 35.3 und 35.4 vor dem Vakuum-Abscheider 15, d.h. 15a bzw. 15b und am Ausgang der jeweiligen Filtereinrichtung 25, d.h. 25a bzw. 25b der zweiten Filterstufe F2 geöffnet oder geschlossen werden.

Nach Herstellung einer Gleichgewichtsbedingung im Vakuumkreis erhält der jeweilige Antrieb des zu reinigenden Vakuum-Abscheiders über eine Ansteuerung 89 einen bestimmten Steuerbefehl, wobei über eine parallele Ansteuerung 91 die entsprechenden Ventile 35 angesteuert werden. Durch diesen Befehl kann dann die Abreinigung der Wärmetauscherrohre, d.h. der Kühlrohre 45 und der Behälterinnenseiten des Behälters durchgeführt werden.

Bei nicht redundanter Auslegung wird das jeweilige Reinigungssegment der Abstreifer-Anordnung über den zugehörigen Antrieb angesteuert.

Ziel ist, ein an der Plastifiziereinheit 1, d.h. am Extruder 1' anliegendes Vakuum unabhängig von feuchtebeaufschlagtem Ausgangsmaterial, verschmutzten Filtern, Abscheidern oder äußeren Einflüssen, wie z.B. Undichtigkeiten im System, auf gleichem Niveau zu halten.

Hierzu wird aus mehreren Pumpenständen, die selbst jeweils aus bis zu drei Vakuumpumpen bestehen können, in einem Vakuumbus 79, 81 ausreichend Vakuum zur Verfügung gestellt. Je nach Erfordernis werden die Pumpenstände dem Vakuumbus zu- bzw. weggeschalten. Ebenso möglich ist die Regelung der Vakuumlevel der einzelnen Pumpen in Abhängigkeit von der Beladung des Prozessgases. Die Vakuumpumpen werden mehrstufig aufgebaut um thermische Überlastung zu vermeiden. Evtl. ist ein Zwischenkühlen der einzelnen Verdichtungsstufen empfehlenswert.

Nach der Abreinigung kann bei redundanter Auslegung das System vollständig gewartet oder wieder betrieben werden. Bei nicht redundanter Anordnung läuft das System weiter und wird innerhalb der Wartungsintervalle der gesamten Produktionsanlage gereinigt.

## Patentansprüche

1. Vorrichtung zum Entgasen von Polymerschmelzen, insbesondere für die kontinuierliche Weiterverarbeitung zu verstreckten Polymerfolien, mit folgenden Merkmalen
- es ist eine Plastifiziereinheit (1) vorgesehen,
- der Plastifiziereinheit (1) ist zumindest eine Vakuumzone (5) zugeordnet,
- die zumindest eine Vakuumzone (5) ist ferner über eine Vakuum- oder Entgasungsleitung (11) zumindest über einen Vakuum-Abscheider (15; 15a, 15b) mit einer Vakuumanlage (7) verbunden, und
- der zumindest eine Vakuum-Abscheider (15; 15a, 15b) umfasst ein Vakuum-Abscheidergehäuse (115) mit einem Gaseintritt (19) und einem Gasaustritt (21), wobei der Gaseintritt (19) mit der Vakuumzone (5) und der Gasaustritt (21) mit der Vakuumanlage (7) zumindest mittelbar verbunden ist,
- der zumindest eine Vakuum-Abscheider (15; 15a, 15b) umfasst im Behälter-Innenraum (115c) des Vakuum-Abscheidergehäuses (115) parallel zueinander verlaufende Kühlrohre (45),
- es ist eine Reinigungsvorrichtung (RV) mit einem Schaber oder einem Abstreifer (61) vorgesehen, die an die Querschnittsform der Kühlrohre (45) und vorzugsweise an den Verlauf der Innenwandung des Vakuum-Abscheidergehäuses (115) angepasst ist und zumindest in einer Teilhöhe zumindest bis zum unteren Ende der Kühlrohre verfahrbar ist
**gekennzeichnet durch** die folgenden weiteren Merkmale
- die Kühlrohre (45) sind doppelwandig ausgebildet und umfassen ein Außenrohr (45a), in welchem unter Ausbildung eines Abstandsraumes (145) ein Innenrohr (45b) verläuft, derart, dass über einen Außenrohr-Zulauf Kühlmedium in den Abstandsraum (145) zwischen dem Außenrohr (45a) und dem Innenrohr (45b) einströmen und im Inneren des Außenrohres (45a) über eine entfernt liegenden Umströmverbindung (45c) in das Innenrohr (45b) und von dort in entgegengesetzter Richtung zu einem Kühlmittelauslass oder umgekehrt umwälzbar ist,
- die Kühlrohre (45) enden in einem Abstand (H) oberhalb eines Auffangraumes (57) oder des Behälterbodens (115d) des Vakuum-Abscheidergehäuses (115),
- der zumindest eine Vakuum-Abscheider (15; 15a; 15b) bildet eine erste Filterstufe (F1), der eine zweite Filterstufe (F2) mit zumindest einem Filter (25; 25a; 25b) zugeordnet ist,
- der ersten Filterstufe (F1) oder den zur ersten Filterstufe (F1) zugehörenden Vakuum-Abscheidern (15; 15a, 15b) ist ein zwischen einer Öffnungs- und einer Schließstellung verstellbares Ventil (35.1, 35.3) vorgeschaltet und dem zumindest einen oder den zumindest beiden Filtern (25; 25a, 25b) der zweiten Filterstufe (F2) ist ein weiteres zwischen einer Öffnungs- und einer Schließstellung verstellbares Ventil (35.2, 35.4) nachgeschaltet, und
- die Ventile (35.1 bis 35.8) sind über eine Ansteuerung (91) betätigbar, wobei die Reinigungsvorrichtung (RV) über die gleiche oder eine separate Ansteuerung (91, 89) betätigbar ist, und wobei eine Steuerungsvorrichtung (77) vorgesehen ist, so dass die Ansteuerung (89, 91) in Abhängigkeit von gemessenen Drücken in Leitungsabschnitten betätigbar ist, wozu Drucksensoren (P) in den Leitungsabschnitten vorzugsweise zwischen der ersten und zweiten Filterstufe (F1, F2) sowie in den den Vakuumpumpen vorgelagerten Leitungsabschnitten vorgesehen sind.

2. Vorrichtung nach Anspruch 1, **dadurch gekennzeichnet, dass** das Vakuum-Abscheidergehäuse (115) doppelwandig ausgebildet ist, nämlich mit einer Behälter-Außenwand (115a) und einer Behälter-Innenwand (115b), wobei über den dazwischen befindlichen Gehäusewand-Innenraum (115e) Kühlmedium zwischen einem Kühlmittel-Zulauf (37) und einem Kühlmittel-Ablauf (39) umwälzbar ist.

3. Vorrichtung nach Anspruch 1 oder 2, **dadurch gekennzeichnet, dass** die Reinigungsvorrichtung (RV) einen Abstreifer oder Schaber (61; 61a, 61b) zur Reinigung der Innenwandung des Vakuum-Abscheidergehäuses (115) umfasst oder dass eine zusätzliche Reinigungsvorrichtung (RV) zur Reinigung der Innenwandung (115f) des Vakuum-Abscheidergehäuses (115) vorgesehen ist, die parallel zur Längserstreckung der Kühlrohre (45) betätigbar ist.

4. Vorrichtung nach einem der Ansprüche 1 bis 3, **dadurch gekennzeichnet, dass** die Kühlrohre (45) parallel zueinander verlaufen und dabei vertikal ausgerichtet oder gegenüber der Vertikalen geneigt angeordnet sind, wobei der Neigungswinkel gegenüber der Vertikalen kleiner als 45°, insbesondere kleiner als 30° und insbesondere kleiner als 15° ist.

5. Vorrichtung nach einem der Ansprüche 1 bis 4, **dadurch gekennzeichnet, dass** die Kühlrohre (45) mit ihrem unteren Ende oder ihrer Unterkante (45d) so in einem Höhenabstand (H) gegenüber dem Gehäuseboden (115d) enden, dass der Gaseintritt (19) unterhalb der durch das untere Ende bzw. der Unterkante (45d) der Kühlrohre (45) gebildeten Höhenlinie angeordnet ist.

6. Vorrichtung nach einem der Ansprüche 1 bis 5, **dadurch gekennzeichnet, dass** der Gasaustritt (21) im oberen Bereich des Vakuum-Abscheidegehäuses (115) vorgesehen ist.

7. Vorrichtung nach einem der Ansprüche 1 bis 6, **dadurch gekennzeichnet, dass** in dem Vakuum-Abscheidergehäuse (115) eine Reinigungsöffnung (51) vorgesehen ist, die unterhalb des unteren Endes bzw. der Unterkante (45d) der Kühlrohre (45) im Gehäuseboden (115d) oder in einem Seitenwandabschnitt des Vakuum-Abscheidegehäuses (115) angeordnet ist.

8. Vorrichtung nach einem der vorhergehenden Ansprüche, **dadurch gekennzeichnet, dass** die Reinigungsvorrichtung (RV) einen segmentierten oder zumindest zweigeteilten Abstreifer oder Schaber (61; 61a, 61b) umfasst, deren Abstreifer- oder Schaber-Teile (61a, 61b) in Längsrichtung der Kühlrohre (45) versetzt zueinander an einer gemeinsamen Betätigungseinrichtung (53a) befestigt sind oder gemeinsam in Längsrichtung der Kühlrohre (45) verfahrbar sind.

9. Vorrichtung nach einem der vorhergehenden Ansprüche, **dadurch gekennzeichnet, dass** die Reinigungsvorrichtung (RV) mit zumindest zwei Reinigungsantrieben (53, 53') mit zumindest zwei Abstreifer oder Schaber (61; 61a, 61b) vorgesehen ist, die getrennt voneinander verfahrbar sind, wobei jeder der beiden Abstreifer oder Schaber (61; 61a, 61b) nur einem Teil und vorzugsweise nur der Hälfte der Kühlrohre (45) und/oder die GehäuseInnenwand (115f) des Vakuum-Abscheidergehäuses (115) zugeordnet ist.

10. Vorrichtung nach einem der vorhergehenden Ansprüche, **dadurch gekennzeichnet, dass** die zumindest beiden parallel zueinander geschalteten Vakuum-Abscheider (15; 15a, 15b) die erste Filterstufe (F1) bilden, der die zweite Filterstufe (F2) mit zwei parallel zueinander betriebenen Filtern (25; 25a, 25b) zugeordnet ist.

11. Vorrichtung nach Anspruch 10, **dadurch gekennzeichnet, dass** dem zumindest einen und den vorzugsweise beiden parallel zueinander geschalteten Filtern (25; 25a, 25b) der zweiten Filterstufe (F2) jeweils eine zur Vakuumanlage (7) führende Vakuumleitung (75, 76) zugeordnet ist, die vorzugsweise über eine Verbindungsstelle (81) zur Vakuumanlage (7) führt.

12. Vorrichtung nach Anspruch 10 oder 11, **dadurch gekennzeichnet, dass** der Filterstufe (F2) mehrere parallel zueinander verlaufende Vakuumleitungen (79) nachgeschaltet sind, in denen jeweils ein zwischen einer Öffnungs- und einer Schließstellung verstellbares Ventil (35.5, 35.6, 35.7, 35.8), ein Drucksensor (P) in Leitungsabschnitten zwischen der zumindest einen Vakuumzone (5) und der Vakuumanlage (7) vorgesehen sind, nämlich
- im Bereich der zumindest einen Vakuumzone (5) oder der Vakuum- oder Entgasungsleitung (11),
- zwischen der ersten und zweiten Filterstufe (F1, F2) und/oder
- in den, den Vakuumpumpen (179) unmittelbar vorgelagerten Vakuumleitungen (79), vorzugsweise zwischen den in Absaugrichtung vorgelagerten Ventilen (35.5 bis 35.8) und den Vakuumpumpen (179).

## Claims

1. Device for degassing polymer melts, in particular for the purpose of continuous post-processing to form drawn polymer films, comprising the following features:
- a plasticising unit (1) is provided,
- at least one vacuum region (5) is associated with the plasticising unit (1),
- the at least one vacuum region (5) is furthermore connected to a vacuum system (7) via a vacuum line or degassing line (11) at least via one vacuum separator (15; 15a, 15b), and
- the at least one vacuum separator (15; 15a, 15b) comprises a vacuum separator housing (115) having a gas inlet (19) and a gas outlet (21), the gas inlet (19) being at least indirectly connected to the vacuum region (5) and the gas outlet (21) being at least indirectly connected to the vacuum system (7),
- the at least one vacuum separator (15; 15a, 15b) comprises cooling tubes (45) which extend in parallel with one another in the container inner chamber (115c) of the vacuum separator housing (115),
- a cleaning device (RV) is provided, which comprises a scraper or a wiper (61), is adapted to the cross-sectional shape of the cooling tubes (45) and preferably to the course of the inner wall of the vacuum separator housing (115), and is movable at least in one partial vertical portion as far as to the bottom end of the cooling tubes.
**characterised by** the following further features:
- the cooling tubes (45) have a double-wall design and comprise an outer tube (45a), in which an inner tube (45b) extends, thereby forming a space (145), in such a way that coolant flows into the space (145) between the outer tube (45a) and the inner tube (45b) via an outer tube supply line, and such that, inside the outer tube (45a), said coolant can be recirculated into the inner tube (45b) via a remote circulation connection (45c), and from there, in the opposite direction, to a coolant outlet, or vice versa,
- the cooling tubes (45) terminate at a spacing (H) above a collection chamber (57) or above the container floor (115d) of the vacuum separator housing (115)
- the at least one vacuum separator (15; 15a, 15b) provides a first filter stage (F1), to which a second filter stage (F2) with at least one filter (25; 25a, 25b) is elocated,
- a valve (35.1, 35.3), which can move between an open position and a closed position, is connected upstream of the first filter stage (F1) or of the vacuum separators (15; 15a, 15b) belonging to the first filter stage (F1), and an additional valve (35.2, 35.4), which can move between an open position and a closed position, is connected downstream of the at least one or the at least two filters (25; 25a, 25b) of the second filter stage (F2), and
- the valves (35.1 to 35.8) can be operated by means of a drive (91), in that the cleaning device (RV) can be operated by means of the same drive or a separate drive (91, 89), and in that a control device (77) is provided whereby the drive (89, 91) can be operated depending on pressures in line portions, for which purpose pressure sensors (P) are provided in the line portions preferably between the first and second filter stage (F1, F2) and in the line portions upstream of the vacuum pumps.

2. Device according to claim 1, **characterised in that** the vacuum separator housing (115) has a double-wall design, specifically having a container outer wall (115a) and a container inner wall (115b), it being possible to recirculate coolant between a coolant supply line (37) and a coolant discharge line (39) by means of the housing wall inner space (115e) therebetween.

3. Device according to either claim 1 or claim 2, **characterised in that** the cleaning device (RV) comprises a wiper or scraper (61; 61a, 61b) for cleaning the inner wall of the vacuum separator housing (115), or **in that** an additional cleaning device (RV) is provided for cleaning the inner wall (115f) of the vacuum separator housing (115), which device can be operated in parallel with the longitudinal extent of the cooling tubes (45).

4. Device according to any of claims 1 to 3, **characterised in that** the cooling tubes (45) extend in parallel with one another and in the process are aligned vertically or are arranged at an angle with respect to the vertical, the angle of inclination with respect to the vertical being less than 45°, in particular less than 30° and more particularly less than 15°.

5. Device according to any of claims 1 to 4, **characterised in that** the bottom end or bottom edge (45d) of the cooling tubes (45) terminates at such a vertical spacing (H) from the housing floor (115d) that the gas inlet (19) is arranged below the height line formed by the bottom end or bottom edge (45d) of the cooling tubes (45).

6. Device according to any of claims 1 to 5, **characterised in that** the gas outlet (21) is provided in the upper region of the vacuum separator housing (115).

7. Device according to any of claims 1 to 6, **characterised in that** a cleaning opening (51) is provided in the vacuum separator housing (115) and is arranged below the bottom end or bottom edge (45d) of the cooling tubes (45) in the housing floor (115d) or in a side wall portion of the vacuum separator housing (115).

8. Device according to any of the preceding claims, **characterised in that** the cleaning device (RV) comprises a segmented wiper or scraper (61; 61a, 61b) or a wiper or scraper that has been divided at least into two, the wiper parts or scraper parts (61a, 61b) of which are fastened to a common operating means (53a) so as to be offset from each other in the longitudinal direction of the cooling tubes (45), or are movable together in the longitudinal direction of the cooling tubes (45).

9. Device according to any of the preceding claims, **characterised in that** the cleaning device (RV) is provided having at least two cleaning drives (53, 53') having at least two wipers or scrapers (61; 61a, 61b) which can be moved separately from each other, wherein each of the two wipers or scrapers (61; 61a, 61b) is only assigned to a part of, preferably only to half, the cooling tubes (45) and/or the housing inner wall (115f) of the vacuum separator housing (115).

10. Device according to any of the preceding claims, **characterised in that** the at least two vacuum separators (15; 15a, 15b), which are connected in parallel with one another, form the first filter stage (F1), to which is assigned the second filter stage (F2) having two filters (25; 25a, 25b) which are operated in parallel with one another.

11. Device according to claim 10, **characterised in that** a vacuum line (75, 76) leading to the vacuum system (7) is assigned in each case to the at least one and to the preferably two filters (25; 25a, 25b), which are connected in parallel with one another, of the second filter stage (F2), said line preferably leading to the vacuum system (7) via a connection point (81).

12. Device according to either claim 10 or claim 11, **characterised in that**, downstream of the filter stage (F2), there is connected a plurality of vacuum lines (79), which extend in parallel with one another and in each of which there is provided a valve (35.5, 35.6, 35.7, 35.8) which can move between an open position and a closed position and a pressure sensor (P) in line portions between the at least one vacuum region (5) and the vacuum system (7), specifically
- in the region of the at least one vacuum region (5) or of the vacuum line or degassing line (11),
- between the first and second filter stage (F1, F2) and/or
- in the vacuum lines (79) which are connected directly upstream of the vacuum pumps (179), preferably between the valves (35.5 to 35.8) which are upstream in the suction direction and the vacuum pumps (179).

## Revendications

1. Dispositif de dégazage de polymères fondus, en particulier pour la transformation continue en feuilles de polymère étirées, comprenant les éléments suivants :
- il est prévu une unité de plastification (1),
- au moins une zone sous vide (5) est associée à l'unité de plastification (1),
- ladite au moins une zone sous vide (5) est en outre reliée à une installation sous vide (7) via au moins un séparateur sous vide (15 ; 15a, 15b), et
- ledit au moins un séparateur sous vide (15 ; 15a, 15b) comprend un boîtier (115) ayant une entrée de gaz (19) et une sortie de gaz (21), l'entrée de gaz (19) étant reliée au moins indirectement à la zone sous vide (5) et la sortie de gaz (21) étant reliée au moins indirectement à l'installation sous vide (7),
- ledit au moins un séparateur sous vide (15 ; 15a, 15b) comprend des tubes de refroidissement (45) qui s'étendent parallèlement les uns aux autres dans l'espace intérieur (115c) du boîtier (115) du séparateur sous vide,
- il est prévu un dispositif de nettoyage (RV) qui comporte un grattoir ou un racleur (61) et qui est adapté à la forme en section transversale des tubes de refroidissement (45) et de préférence à l'allure de la paroi intérieure du boîtier (115) du séparateur sous vide et qui est déplaçable, au moins à une hauteur partielle, au moins jusqu'à l'extrémité inférieure des tubes de refroidissement,
**caractérisé par** les autres éléments suivants :
- les tubes de refroidissement (45) sont réalisés à paroi double et comprennent un tube extérieur (45a) dans lequel s'étend un tube intérieur (45b) en réalisant un espace d'écartement (145), de telle sorte que via une admission du tube extérieur, un réfrigérant peut s'écouler jusque dans l'espace d'écartement (145) entre le tube extérieur (45a) et le tube intérieur (45b) et peut circuler, à l'intérieur du tube extérieur (45a), via une liaison de by-pass (45c) distante, jusque dans le tube intérieur (45b) et depuis ici en direction opposée jusqu'à une évacuation de réfrigérant, ou inversement,
- les tubes de refroidissement (45) se terminent à une distance (H) au-dessus d'un espace de collecte (57) ou du fond de récipient (115d) du boîtier (115) du séparateur sous vide,
- ledit au moins un séparateur sous vide (15 ; 15a ; 15b) constitue un premier étage de filtrage (F1) auquel est associé un second étage de filtrage (F2) ayant au moins un filtre (25 ; 25a ; 25b),
- en amont du premier étage de filtrage (F1) ou des séparateurs sous vide (15 ; 15a, 15b) appartenant au premier étage de filtrage (F1) est prévue une vanne (35.1, 35.3) réglable entre une position d'ouverture et une position de fermeture, et
- en aval dudit au moins un ou desdits aux moins deux filtres (25 ; 25a, 25b) du second étage de filtrage (F2) est prévue une autre vanne (35.2, 35.4) réglable entre une position d'ouverture et une position de fermeture, et
- les vannes (35.1 à 35.8) sont actionnables par un moyen de pilotage (91), le dispositif de nettoyage (RV) étant actionnable par le même moyen de pilotage ou par un moyen de pilotage séparé (91, 89), et il est prévu un dispositif de commande (77), de sorte que le moyen de pilotage (89, 91) est actionnable en fonction des pressions mesurées dans les portions de conduite, ce pourquoi il est prévu des capteurs de pression (P) dans les portions de conduite de préférence entre le premier et le second étage de filtrage (F1, F2) ainsi que dans les portions de conduite agencées en amont des pompes à vide.

2. Dispositif selon la revendication 1,
**caractérisé en ce que**
le boîtier (115) du séparateur sous vide est réalisé à paroi double, à savoir avec une paroi extérieure de récipient (115a) et avec une paroi intérieure de récipient (115b), et
un réfrigérant peut circuler entre l'admission de réfrigérant (37) et une évacuation de réfrigérant (39) via l'espace intérieur (115e) interposé de la paroi de boîtier.

3. Dispositif selon la revendication 1 ou 2,
**caractérisé en ce que**
le dispositif de nettoyage (RV) comprend un racleur ou un grattoir (61 ; 61a, 61b) pour nettoyer la paroi intérieure du boîtier (115) du séparateur sous vide, ou **en ce que**
il est prévu un dispositif de nettoyage supplémentaire (RV) pour nettoyer la paroi intérieure (115f) du boîtier (115) du séparateur sous vide, qui est actionnable parallèlement à l'extension longitudinale des tubes de refroidissement (45).

4. Dispositif selon l'une des revendications 1 à 3,
**caractérisé en ce que**
les tubes de refroidissement (45) s'étendent parallèlement les uns aux autres en étant orientés verticalement ou en étant inclinés par rapport à la verticale, l'angle d'inclinaison par rapport à la verticale étant inférieur à 45°, en particulier inférieur à 30° et notamment inférieur à 15°.

5. Dispositif selon l'une des revendications 1 à 4,
**caractérisé en ce que**
les tubes de refroidissement (45) se terminent par leur extrémité inférieure ou par leur arête inférieure (45d), à une distance en hauteur (H) par rapport au fond de boîtier (115d), de telle sorte que l'entrée de gaz (19) est disposée au-dessous de la ligne en hauteur formée par l'extrémité inférieure ou par l'arête inférieure (45d) des tubes de refroidissement (45).

6. Dispositif selon l'une des revendications 1 à 5,
**caractérisé en ce que**
la sortie de gaz (21) est prévue dans la zone supérieure du boîtier (115) du séparateur sous vide.

7. Dispositif selon l'une des revendications 1 à 6,
**caractérisé en ce que**
dans le boîtier (115) du séparateur sous vide, il est prévu une ouverture de nettoyage (51) qui est disposée au-dessous de l'extrémité inférieure ou de l'arête inférieure (45d) des tubes de refroidissement (45) dans le fond de boîtier (115d) ou dans une portion de paroi latérale du boîtier (115) du séparateur sous vide.

8. Dispositif selon l'une des revendications précédentes,
**caractérisé en ce que**
le dispositif de nettoyage (RV) comprend un racleur ou grattoir (61 ; 61a, 61b) segmenté ou au moins divisé en deux, dont les parties de racleur ou de grattoir (61a, 61b) sont fixées à un moyen d'actionnement commun (53a) en étant décalées l'une de l'autre en direction longitudinale des tubes de refroidissement (45) ou sont mobiles conjointement en direction longitudinale des tubes de refroidissement (45).

9. Dispositif selon l'une des revendications précédentes,
**caractérisé en ce que**
le dispositif de nettoyage (RV) est pourvu d'au moins deux entraînements de nettoyage (53, 53') comprenant au moins deux racleurs ou grattoirs (61 ; 61a, 61b), qui sont mobiles séparément l'un de l'autre, chacun des deux racleurs ou grattoirs (61 ; 61a, 61b) n'étant associé qu'à une partie et de préférence qu'à la moitié des tubes de refroidissement (45) et/ou à la paroi intérieure (115f) du boîtier (115) du séparateur sous vide.

10. Dispositif selon l'une des revendications précédentes,
**caractérisé en ce que**
lesdits au moins deux séparateurs sous vide (15 ; 15a, 15b) branchés en parallèle l'un à l'autre constituent le premier étage de filtrage (F1) auquel est associé le second étage de filtrage (F2) ayant deux filtres (25 ; 25a, 25b) qui fonctionnent parallèlement l'un à l'autre.

11. Dispositif selon la revendication 10,
**caractérisé en ce que**
une conduite sous vide respective (75, 76) menant vers l'installation sous vide (7) est associée audit au moins un et de préférence aux deux filtres (25 ; 25a, 25b) du second étage de filtrage (F2) branchés en parallèle l'un à l'autre, et mène vers l'installation sous vide (7) de préférence via un emplacement de jonction (81).

12. Dispositif selon la revendication 10 ou 11,
**caractérisé en ce que**
an aval de l'étage de filtrage (F2) sont prévues plusieurs conduites sous vide (79) qui s'étendent parallèlement les unes aux autres et dans lesquelles sont prévus respectivement une vanne (35.5, 35.6, 35.7, 35.8) réglable entre une position d'ouverture et une position de fermeture, un capteur de pression (P) dans des portions de conduite entre ladite au moins une zone sous vide (5) et l'installation sous vide (7),
à savoir
- au niveau de ladite au moins zone sous vide (5) ou de la conduite sous vide ou de dégazage (11),
- entre le premier et le second étage de filtrage (F1, F2), et/ou
- dans les conduites sous vide (79) disposées directement en amont des pompes à vide (179), de préférence entre les vannes (35.5 à 35.8) disposées en amont en direction d'aspiration et les pompes à vide (179).
